(19) Europäisches Patentamt
European Patent Office
Office européen des brevets

(11) **EP 4 446 732 A1**

(12) **EUROPEAN PATENT APPLICATION**
published in accordance with Art. 153(4) EPC

(43) Date of publication:
**16.10.2024 Bulletin 2024/42**

(21) Application number: **22903964.9**

(22) Date of filing: **10.11.2022**

(51) International Patent Classification (IPC):
*G01N 30/02* (2006.01)     *G01N 30/26* (2006.01)
*G01N 30/32* (2006.01)     *G01N 30/86* (2006.01)

(52) Cooperative Patent Classification (CPC):
**G01N 30/02; G01N 30/26; G01N 30/32;
G01N 30/86**

(86) International application number:
**PCT/JP2022/041993**

(87) International publication number:
**WO 2023/106033 (15.06.2023 Gazette 2023/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.12.2021 JP 2021201009**

(71) Applicant: **HITACHI HIGH-TECH CORPORATION
Tokyo 105-6409 (JP)**

(72) Inventors:
• **NOGAMI Makoto
Tokyo 105-6409 (JP)**
• **HARADA Yushi
Tokyo 105-6409 (JP)**

(74) Representative: **Strehl Schübel-Hopf & Partner
Maximilianstrasse 54
80538 München (DE)**

(54) **METHOD FOR CONTROLLING LIQUID CHROMATOGRAPH**

(57)     Provided is a method for controlling a liquid chromatograph capable of determining whether a bubble remains in a flow path. The method for controlling a liquid chromatograph (300) according to the invention is a method for controlling the liquid chromatograph (300) including a liquid delivery pump, a flow path connected to the liquid delivery pump, a flow path switching valve (an auto purge valve (205), an injection valve (207), and a stream select valve (304)) provided in the flow path and configured to switch a plurality of connection destinations for the flow path, and a pressure sensor configured to detect at least one of a liquid delivery pressure of the liquid delivery pump, a flow path pressure in the flow path, and a pressure applied to the flow path switching valve. The method includes rotating the flow path switching valve during liquid delivery from the liquid delivery pump, and determining whether a bubble remains in the flow path based on a pressure fluctuation when the pressure lowered by rotating the flow path switching valve increases.

[FIG. 1]

EP 4 446 732 A1

**Description**

Technical Field

The present disclosure relates to a method for controlling a liquid chromatograph.

Background Art

A general liquid chromatograph (HPLC) includes a liquid delivery pump for delivering a mobile phase of a liquid, an injector for introducing a sample, a separation column for separating the sample, a column oven for controlling a temperature of the separation column, and a pipe for connecting the liquid delivery pump, the injector, the separation column, and the column oven. The liquid delivery pump holds a plurality of mobile phases and performs gradient liquid delivery for delivering a liquid to the separation column while changing a mixing ratio for each hour. In the gradient liquid delivery, the liquid delivery pump first delivers a mobile phase having a composition with a low sample elution ability to the separation column, and thus, a target component in the sample injected into the separation column is aspirated to the separation column (aspiration step). Next, the liquid delivery is performed while changing to a composition with a high elution ability, and the target component in the sample aspirated to the separation column is eluted from the separation column and reaches a detector (separation step). After the target component is detected, in the liquid delivery pump, the composition is changed to the composition having a high elution ability in order to clean impurities remaining in the separation column. In this manner, in gradient elution, the composition of the mobile phase in the separation column is changed by one time of analysis (cleaning step). When a continuous measurement is performed with the gradient liquid delivery, it is necessary to change the composition of the mobile phase in the separation column to an initial mobile phase in order to start next analysis after one time of analysis is completed (equilibrium step). Further, in order to avoid contamination of impurities, it is necessary to perform preparation operations such as cleaning of the injector and returning of an injector switching valve to an initial position.

As the liquid chromatograph, a plurality of liquid chromatographs may be included. The liquid chromatographs are each referred to as a stream, are integrated into one detector via a stream select valve, and each have a function capable of performing mutual analysis. In the present liquid chromatograph, times for the equilibrium step to the separation column, the aspiration step, the elution step, the cleaning step, and the injector cleaning step are adjusted, the stream select valve is rotated so as to be connected to the detector during the elution step of each stream, the target component is introduced from the corresponding stream to the detector, and a standby time of the detector is eliminated. In this manner, the present liquid chromatograph achieves a high throughput.

The present liquid chromatograph is more complicated than a general liquid chromatograph, and it is difficult to specify a defect location when a defect occurs in the apparatus. Examples of the defect include clogging of a flow path, leakage, and bubble remaining. When the clogging of a flow path occurs, an increase in pressure value of a pressure sensor provided in each liquid delivery pump indicates a clogging location downstream of the pressure sensor. When the leakage occurs, the leakage can be detected by a leakage sensor provided in each liquid delivery pump and in the vicinity of a pipe flow path. Further, a decrease in pressure value of the pressure sensor provided in each liquid delivery pump indicates a leakage location downstream of the pressure sensor. On the other hand, in the case of the bubble remaining or the like, a large amount of the bubble remaining indicates that the bubble remains since pulsation of the value of the pressure sensor provided in each liquid delivery pump is detected during normal liquid delivery. However, when the amount of the bubble remaining is a very small value, a pressure fluctuation is not detected during the normal liquid delivery, and the bubble remaining cannot be noticed. In this case, a fluctuation in holding time of a measurement target substance, a fluctuation in peak intensity, or the like can be noticed after acquiring data, which mostly causes waste of the sample or waste of a measurement time.

In view of such a situation, a liquid delivery system for a liquid chromatography described in PTL 1 has been proposed.

The liquid delivery system includes a liquid delivery mechanism, a pressure sensor, and a liquid delivery failure detection unit.

The liquid delivery mechanism delivers a liquid continuously by at least one plunger pump that performs liquid delivery by reciprocating a plunger. The pressure sensor detects a liquid delivery pressure by the liquid delivery mechanism. The liquid delivery failure detection unit detects a liquid delivery failure of the liquid delivery mechanism by capturing the liquid delivery pressure detected by the pressure sensor in a cycle in which a fluctuation in one driving cycle of the liquid delivery mechanism can be read, and using the captured liquid delivery pressure.

In this liquid delivery system, the liquid delivery failure detection unit executes a pulsation detection step and a liquid delivery failure detection step in this order.

In the pulsation detection step, a fluctuation width of the liquid delivery pressure within a constant driving cycle of the liquid delivery mechanism is obtained, and pulsation is detected under a condition that the number of continuous periods in which the fluctuation width exceeds a predetermined reference value exceeds a predetermined reference number of times. In the liquid delivery failure detection step, a liquid delivery failure of the liquid delivery mechanism is detected when the pulsation is detected in the pulsation detection step.

In the liquid delivery system described in PTL 1, when a pressure fluctuation exceeding a normal value range is detected during analysis, a discharge port of the plunger pump (liquid delivery pump) is switched to a drain valve and connected to a drain, and the plunger pump is driven at a high speed for a predetermined time to perform a purge operation. Thereafter, in the liquid delivery system, the drain valve is returned, the plunger pump is connected to the separation column, and the pressure fluctuation is monitored for a certain period of time. In addition, when a bubble is mixed in the plunger pump, the liquid is not normally discharged due to compression of the generated bubble, and thus the liquid delivery pressure rapidly decreases. During a discharge operation of another plunger pump, since the liquid is discharged normally, the liquid delivery pressure increases. As a result, a fluctuation (pulsation) of the liquid delivery pressure occurs in synchronization with the driving cycle of the liquid delivery mechanism. The liquid delivery system detects such pulsation to detect the liquid delivery failure of the liquid delivery mechanism. In the liquid delivery system, the bubble that can be discharged by the purge operation is limited to that in the plunger pump.

Citation List

Patent Literature

PTL 1: WO2020/183774

Summary of Invention

Technical Problem

In the liquid delivery system described in PTL 1, it is possible to detect the bubble remaining inside the liquid delivery pump. However, in this liquid delivery system, it is difficult to determine whether a bubble remains in a flow path.

An object of the disclosure is to provide a method for controlling a liquid chromatograph capable of determining whether a bubble remains in a flow path.

Solution to Problem

In order to solve the above problems, for example, a configuration described in Claims is adopted.

The present application includes a plurality of solutions for the above problems, and examples thereof include a method for controlling a liquid chromatograph including a liquid delivery pump, a flow path connected to the liquid delivery pump, a flow path switching valve provided in the flow path, the flow path switching valve being configured to switch a plurality of connection destinations for the flow path, and a pressure sensor configured to detect at least one of a liquid delivery pressure of the liquid delivery pump, a flow path pressure in the flow path, and a pressure applied to the flow path switching valve, the method including: rotating the flow path switching valve during liquid delivery from the liquid delivery pump, and determining whether a bubble remains in the flow path based on a pressure fluctuation when the pressure lowered by rotating the flow path switching valve increases.

Advantageous Effects of Invention

According to the disclosure, it is possible to provide a method for controlling a liquid chromatograph capable of determining whether a bubble remains in a flow path.

Problems, configurations, and effects other than those described above will be made clear by the following description of the embodiments.

Brief Description of Drawings

[FIG. 1] FIG. 1 is a schematic diagram showing a configuration of a liquid chromatograph including three streams.
[FIG. 2] FIG. 2 is a schematic diagram showing a configuration in one stream.
[FIG. 3A] FIG. 3A is a schematic diagram of a pressure profile in a normal state, in which a horizontal axis represents a time (seconds), and a vertical axis represents a pressure value (MPa).
[FIG. 3B] FIG. 3B is a schematic diagram of a pressure profile in an abnormal state, in which a horizontal axis represents a time (seconds), and a vertical axis represents a pressure value (MPa).
[FIG. 4] FIG. 4 is a flowchart of bubble detection.
[FIG. 5] FIG. 5 is a graph showing temporal change information of a deviation of $\Delta P_1$, in which a horizontal axis represents a temporal change time (day), and a vertical axis represents the deviation (%) of $\Delta P_1$.
[FIG. 6] FIG. 6 is a graph showing temporal change information of a deviation of $\Delta P_2$, in which a horizontal axis represents a temporal change time (day), and a vertical axis represents the deviation (%) of $\Delta P_2$.
[FIG. 7] FIG. 7 is a graph showing temporal change information of a deviation of $\Delta T$, in which a horizontal axis represents a temporal change time (day), and a vertical axis represents the deviation (%) of $\Delta T$.

Description of Embodiments

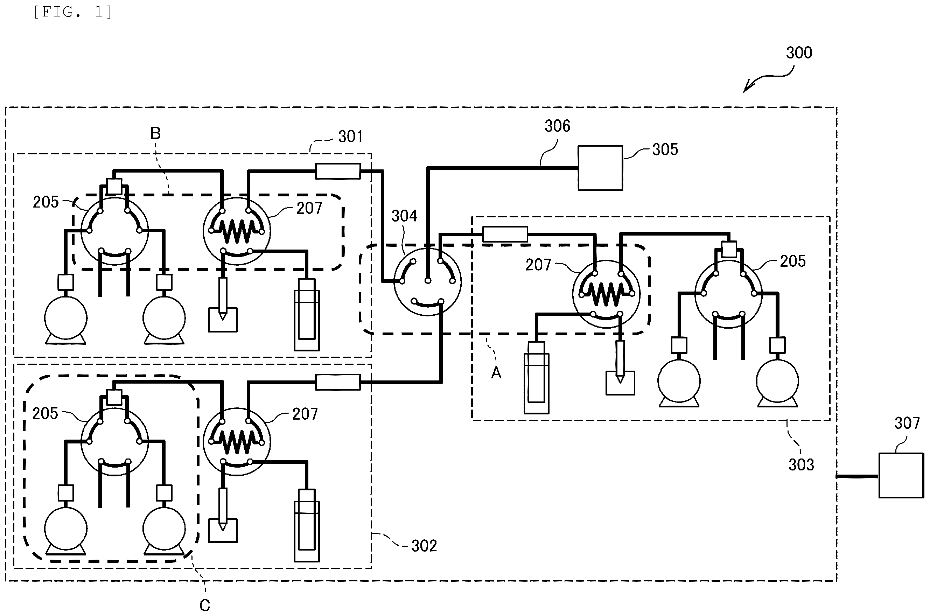

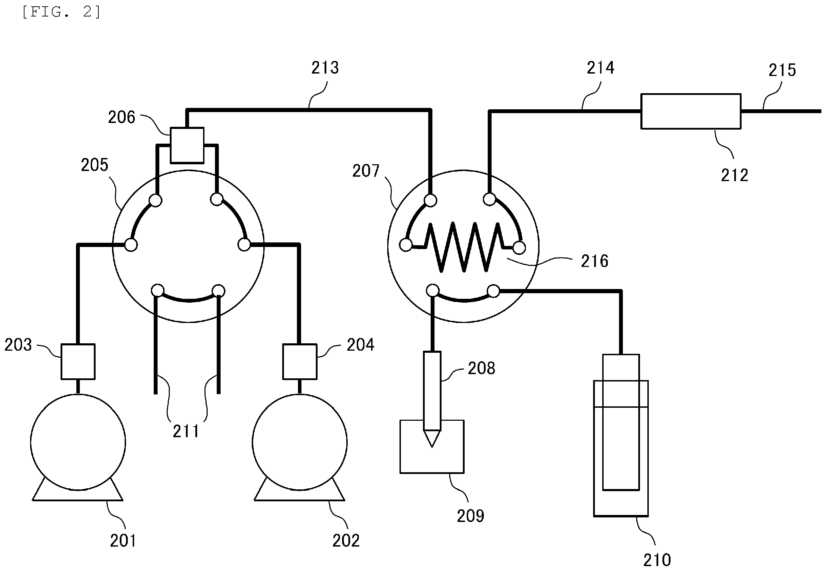

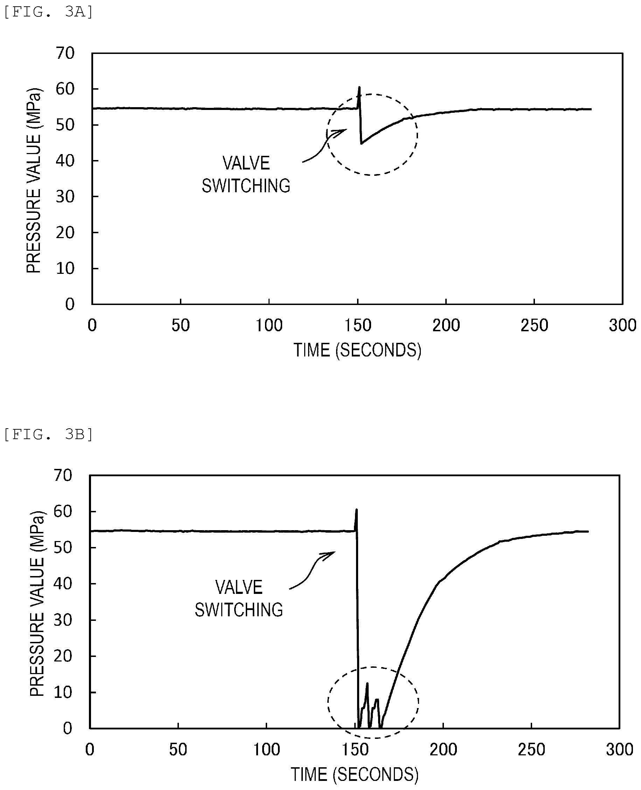

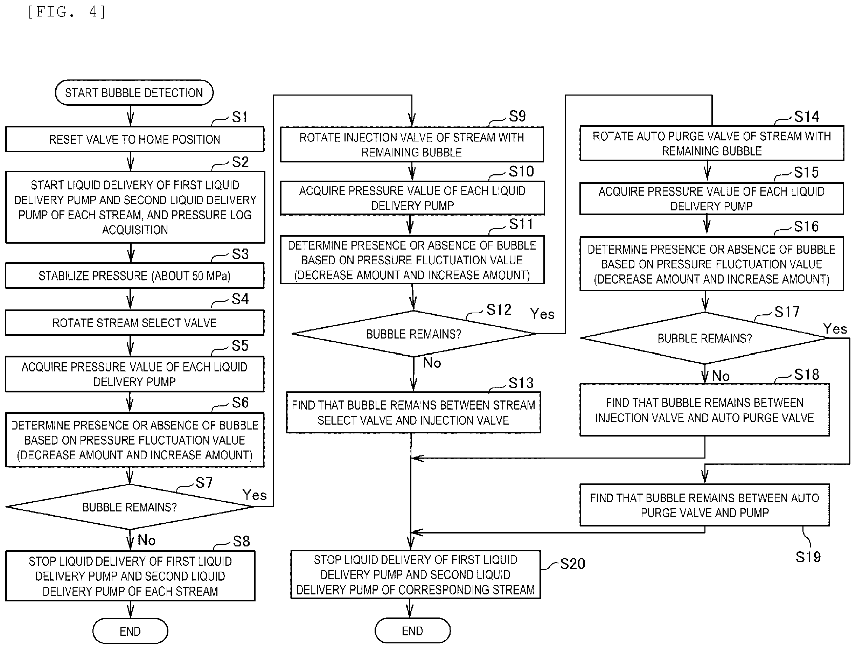

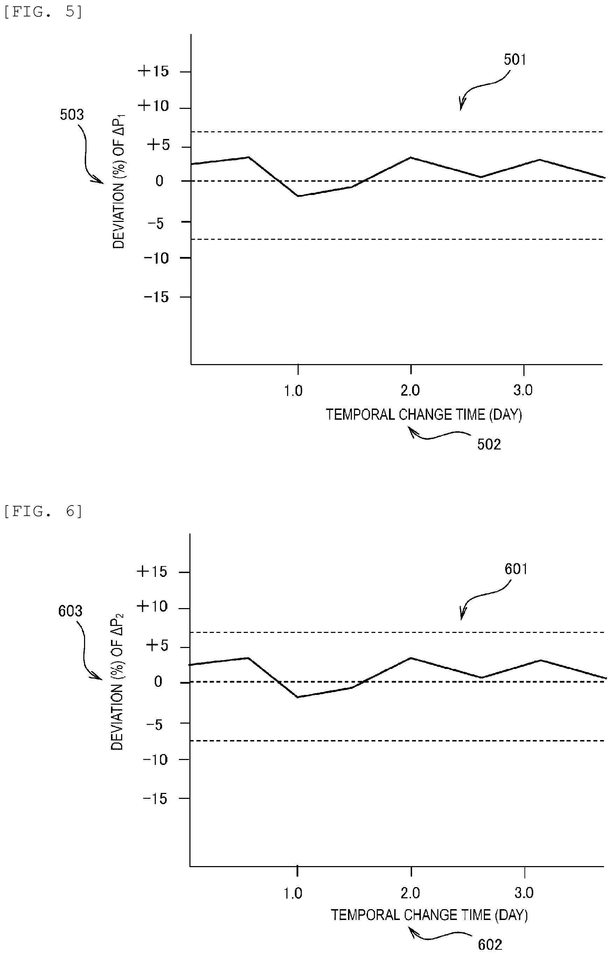

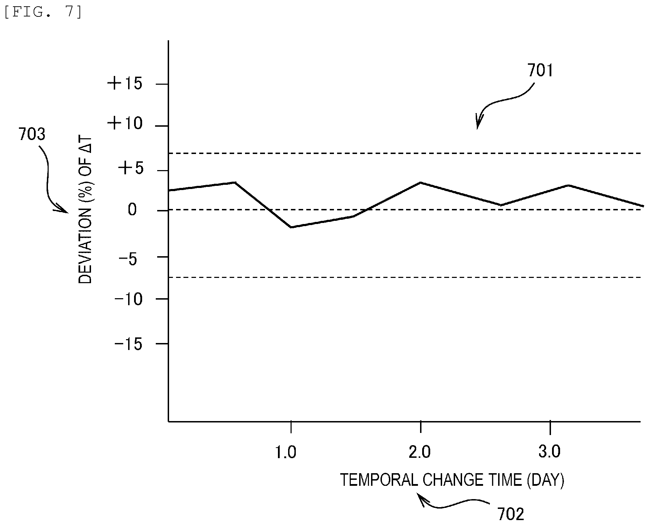

Hereinafter, a method for controlling a liquid chromatograph according to the present embodiment will be described in detail with reference to the drawings as appropriate. FIG. 1 is a schematic diagram showing a configuration of a liquid chromatograph including three streams. FIG. 2 is a schematic diagram showing a configuration in one stream. FIG. 3A is a schematic diagram of a pressure profile in a normal state. FIG. 3B is a schematic diagram of a pressure profile in an abnormal state. FIG. 4 is a flowchart of bubble detection. FIG. 5 is a graph showing temporal change information of a deviation of $\Delta P_1$. FIG. 6 is a graph showing temporal change information of a deviation of $\Delta P_2$. FIG. 7 is a graph showing temporal change information of a deviation of $\Delta T$.

First, an example of a liquid chromatograph 300 will be described with reference to FIG. 1. The liquid chromatograph 300 shown in FIG. 1 includes three streams of a first stream 301, a second stream 302, and a third stream 303. These streams are connected to a detector 305 via a stream select valve 304 and can perform mutual analysis.

Each stream will be described with reference to FIG. 2. As shown in FIG. 2, each of the first stream 301 to the third stream 303 includes, as main components, a first liquid delivery pump 201, a second liquid delivery pump 202, a first pressure sensor 203, a second pressure sensor 204, an auto purge valve 205, a three-way joint 206, an injection valve 207, a sipper 208, a sample holder 209, a syringe 210, a waste liquid flow path 211, a column 212, a first flow path 213, a second flow path 214, and a third flow path 215.

The first liquid delivery pump 201 includes two pumps of a first cylinder pump and a second cylinder pump connected in series, and can perform stable liquid delivery by complementarily driving aspiration and discharge. Similar to the first liquid delivery pump 201, the second liquid delivery pump 202 includes two pumps of a first cylinder pump and a second cylinder pump connected in series. The liquid delivery pumps (the first liquid delivery pump 201 and the second liquid delivery pump 202) are connected to flow paths.

The first pressure sensor 203 is disposed downstream of the first liquid delivery pump 201. The second pressure sensor 204 is disposed downstream of the second liquid delivery pump 202. The first liquid delivery pump 201 is connected to the auto purge valve 205 via the first pressure sensor 203 and the flow path. Similarly, the second liquid delivery pump 202 is connected to the auto purge valve 205 via the second pressure sensor 204 and the flow path. The first pressure sensor 203 and the second pressure sensor 204 detect at least one pressure of a flow path pressure in the flow path and a pressure applied to a flow path switching valve (the auto purge valve 205, the injection valve 207, and the stream select valve 304).

The flow path switching valve (the auto purge valve 205, the injection valve 207, and the stream select valve 304) is provided in the flow path, and can switch a plurality of connection destinations of the flow path.

In the example shown in FIG. 2, the auto purge valve 205 has two switching positions. At a first position, the flow paths from the first liquid delivery pump 201 and the second liquid delivery pump 202 can be connected to the three-way joint 206. At a second position, the flow paths from the first liquid delivery pump 201 and the second liquid delivery pump 202 can be connected to the waste liquid flow path 211. At the second position, in order to perform a preparation operation of the liquid delivery of the liquid delivery pump, the auto purge valve 205 is switched to the waste liquid flow path 211, and a purge operation of the liquid delivery pump performing the liquid delivery at a high flow rate is performed, thereby removing a bubble in the liquid delivery pump and replacing a liquid in the flow path of the liquid delivery pump. At the first position, the flow paths of the first liquid delivery pump 201 and the second liquid delivery pump 202 are mixed at the three-way joint 206, and the liquid delivery to the injection valve 207 is performed via the first flow path 213.

The sipper 208, the syringe 210, and a sample loop 216 are connected to the injection valve 207. In the example shown in FIG. 2, the injection valve 207 has two switching positions. At a first position, the sipper 208, the sample loop 216, and the syringe 210 are connected. At a second position, the column 212 is connected to the flow path (first flow path 213) from the liquid delivery pump and the sample loop 216 via the second flow path 214. At the first position, the syringe 210 is driven, and a sample in a sample container fixed to the sample holder 209 is aspirated from the sipper 208 and introduced into the sample loop 216. At the second position, since the flow path from the liquid delivery pump and the sample loop 216 are connected, the sample introduced into the sample loop 216 at the first position is introduced into the column 212.

The first stream 301, the second stream 302, and the third stream 303 have the same device configuration, and each stream is connected to the detector 305 via the stream select valve 304 (FIG. 1). By adjusting a timing of injection and pump gradient of each stream and a timing of switching the stream select valve 304, it is possible to perform analysis with a high throughput without wasting the sample.

Next, a method for controlling a liquid chromatograph according to the disclosure will be described. In the present embodiment, in order to detect bubble remaining, the flow path switching valve is rotated once. The flow path switching valve may be not rotated once, and, for example, may be rotated by a specified angle and return in an opposite direction by the same angle. In the present embodiment, it is possible to detect the bubble remaining by using, as an index, a pressure fluctuation when a pressure lowered by rotating the flow path switching valve increases.

As shown in the pressure profile in the normal state in FIG. 3A, the pressure fluctuates only by 10 MPa or less after the valve switching in the normal state (see a circle of a broken line in FIG. 3A). In contrast, as shown in the pressure profile in the abnormal state in FIG. 3B, when a bubble remains, the pressure is lowered to substantially zero after the valve switching, and thereafter, the bubble repeatedly compresses and expands in the flow path, and pulsation occurs in the vicinity of 0 MPa to 10 MPa (see a circle of a broken line in FIG. 3B). When the pressure profile having such pulsation is obtained, it is found that the bubble remains in the flow path.

A threshold of the pressure profile is determined by calculating [Formula 1] to [Formula 3]. [Formula 1] < 10 MPa, [Formula 2] < 10 MPa, and [Formula 3] < 50 s.

$$\Delta P_1 = P_{Max} - P_1 \qquad [\text{Formula 1}]$$

$$\Delta P_2 = P_1 - P_{min} \qquad [\text{Formula 2}]$$

$$\Delta T = T_2 - T_1 \quad [\text{Formula 3}]$$

Here, $\Delta P_1$ is a pressure change amount, $\Delta P_2$ is a pressure change amount, $P_{Max}$ is a maximum pressure (maximum reached pressure), $P_{min}$ is a minimum pressure (minimum reached pressure), $P_1$ is a pressure value before the valve switching, $\Delta T$ is a time change point, $T_1$ is a valve switching time, and $T_2$ is a pressure return time (valve switching time, a time for returning to $P_1 \times 80\%$). That is, in the present embodiment, it is possible to determine whether a bubble remains in the flow path based on the pressure fluctuation, that is, [Formula 1] and [Formula 2]. In addition to this pressure fluctuation, a temporal fluctuation for returning to a specified pressure (for example, $P_1 \times 80\%$), that is, [Formula 3] can be used as a determination criterion.

As shown in FIGS. 1 and 2, the liquid chromatograph 300 is provided with a total of seven flow path switching valves. Specifically, the first stream 301, the second stream 302, and the third stream 303 each include the auto purge valve 205 and the injection valve 207. The streams are connected by the stream select valve 304. In the present embodiment, as will be described later, three types of flow path switching valves, that is, the auto purge valve 205, the injection valve 207, and the stream select valve 304 are rotated, and the presence or absence of a bubble is determined based on a pressure fluctuation.

In the present embodiment, a first switching valve positioned upstream of a flow of a fluid and a second switching valve connected downstream of the first switching valve via a flow path are used as the flow path switching valves.

As an example of the first switching valve and the second switching valve, when the first switching valve is the auto purge valve 205, the second switching valve is the injection valve 207.

In addition, as an example of the first switching valve and the second switching valve, when the first switching valve is the injection valve 207, the second switching valve is the stream select valve 304.

With respect to such a liquid chromatograph 300, a step of detecting the bubble remaining in the liquid chromatograph 300 before a measurement and checking the soundness of the apparatus will be described with reference to FIG. 4. The bubble remaining detection in the apparatus is performed at the time of switching the valve during the operation, and in addition, an operator can select and start bubble detection maintenance on a graphical user interface (GUI) screen of the apparatus as one of maintenance items.

First, bubble detection during the maintenance will be described with reference to FIG. 4.

First, a reset operation for returning all the valves to home positions is performed (Step S1). Next, the liquid delivery of the first liquid delivery pump 201 and the second liquid delivery pump 202 of each stream is started. Further, pressure log acquisition performed by a pressure sensor provided in the liquid delivery pump is started simultaneously with the liquid delivery (Step S2). The pressure sensor detects a liquid delivery pressure of the liquid delivery pump. A liquid delivery condition includes that ultrapure water is delivered at a flow rate of 0.44 mL/min, and the valve is on standby until the pressure is stabilized at about 50 MPa (Step S3). The pressure stabilization means that pressure information acquired every 0.1 s is integrated and a fluctuation in 30 seconds falls within a range of ± 1 MPa. After the pressure is stabilized, the stream select valve 304 is rotated (Step S4). The pressure value of each liquid delivery pump is acquired (Step S5), and the presence or absence of a bubble is determined based on a pressure fluctuation value, that is, a decrease amount and an increase amount of the pressure (Step S6). The liquid delivery of the first liquid delivery pump 201 and the second liquid delivery pump 202 of each stream in which no bubble remains is stopped (No in Step S7, Step S8).

On the other hand, the injection valve 207 is rotated in a stream in which it is checked that a bubble remains (Yes in Step S7, Step S9). The pressure value of each liquid delivery pump is acquired (Step S10), and the presence or absence of a bubble is determined based on a pressure fluctuation value, that is, a decrease amount and an increase amount of the pressure (Step S11).

Before the injection valve 207 is rotated in the stream in which it is checked that a bubble remains (that is, before Step S9), the liquid delivery of the first liquid delivery pump 201 and the second liquid delivery pump 202 of the stream in which no bubble remains may be stopped.

When it is determined that no bubble remains during the rotation of the injection valve 207 (No in Step S12), it is found that a bubble remains between the stream select valve 304 and the injection valve 207 of the corresponding stream (that is, the flow path from the second switching valve to the first switching valve) (Step S13, see a portion A in FIG. 1). Thereafter, the liquid delivery of the first liquid delivery pump 201 and the second liquid delivery pump 202 of the corresponding stream is stopped (Step S20).

When it is determined that a bubble remains (Yes in Step S12), the auto purge valve 205 of the corresponding stream is rotated (Step S14). The pressure value of each liquid delivery pump is acquired (Step S15), and the presence or absence of a bubble is determined based on a pressure fluctuation value, that is, a decrease amount and an increase amount of the pressure (Step S16).

When it is determined that no bubble remains during the rotation of the auto purge valve 205, it is found that a bubble remains between the injection valve 207 and the auto purge valve 205 of the corresponding stream (that is, the flow path from the second switching valve to the first switching valve) (No in Step S17, Step S18, see a portion B in FIG. 1). Thereafter, the liquid delivery of the first liquid delivery pump 201 and the second liquid delivery pump 202 of the corresponding stream is stopped (Step S20).

When it is determined that a bubble remains, it is found that the bubble remains between the auto purge valve 205 and the liquid delivery pump of the corresponding stream (that is, the flow path from the first switching valve to the liquid delivery pump) (Yes in Step S17, Step S19, see a portion C in FIG. 1). Thereafter, the liquid delivery of the first liquid delivery pump 201 and the second liquid delivery pump 202 of the corresponding stream is stopped (Step S20).

In this way, the method for controlling the liquid chromatograph 300 according to the present embodiment can determine whether a bubble remains in the flow path by sequentially rotating downstream flow path switching valves (detector 305 side) in the bubble detection during the maintenance. Further, in the present controlling method, when a bubble remains, the liquid chromatograph 300 is cut off by the flow path switching valves as described above, and thus, a bubble remaining location can be found. In the present controlling method, when the bubble detection during the maintenance is started, the series of steps described above is automatically performed. The bubble remaining and the remaining location are displayed on the GUI screen to prompt the operator to perform work.

Next, the bubble detection during the operation will be described.

Unlike the bubble detection during the maintenance, in the bubble detection during the operation, an order of valve switching is random depending on a measurement order. The auto purge valve 205 is switched during the purge operation before the measurement. The injection valve 207 is switched during the injection of the sample. The stream select valve 304 is switched when the three streams are switched. Therefore, it is possible to detect the presence or absence of a remaining bubble, but it is not possible to determine the bubble remaining location. When the bubble remaining is detected, a new measurement reservation cannot be made for the corresponding stream.

On the other hand, a currently reserved measurement is performed. When the reserved measurement is completed, the corresponding stream becomes a stream mask, and the liquid delivery of the liquid delivery pump and temperature control of a column oven are stopped. After the operation is completed and the apparatus is in a standby state, the operator selects the bubble detection maintenance from a maintenance screen of the GUI of the apparatus and performs the bubble detection maintenance. Accordingly, the liquid chromatograph 300 automatically performs the series of steps described above for the maintenance, determines a bubble detection location, and performs work of removing the bubble. A work content will be described below.

When a bubble remains between the stream select valve 304 and the injection valve 207, a result and a remedy are displayed on the maintenance screen. On the maintenance screen, a result "bubble remains between stream select valve and injection valve of stream ***", and remedies "please perform air purge maintenance and perform bubble detection maintenance again" and "please contact service person when bubble remains" are displayed. The air purge maintenance is selected from the maintenance screen of the GUI of the apparatus. In this maintenance, it is possible to select a stream and perform air purge on the corresponding stream. After the air purge maintenance, the bubble detection maintenance is performed again to check the presence or absence of a bubble. The work up to here can be performed by the operator and the service person. When a bubble remains even after the air purge, the service person performs the following work.

  ·Check whether connection of a pipe between the stream select valve 304 and the injection valve 207 is loosened.
  ·Release the connection of the corresponding pipe, and connect the pipe again.
  ·Perform bubble detection maintenance again to check the presence or absence of a bubble.
  ·Replace the corresponding pipe.
  ·Replace the stream select valve 304.
  ·Replace the injection valve 207.
  ·Perform bubble detection maintenance again to check the presence or absence of a bubble.

When a bubble remains between the injection valve 207 and the auto purge valve 205, a result and a remedy are displayed on the maintenance screen. On the maintenance screen, a result "bubble remains between injection valve and auto purge valve of stream ***", and remedies "please perform air purge maintenance and perform bubble detection maintenance again" and "please contact service person when bubble remains" are displayed. The air purge maintenance is selected from the maintenance screen of the GUI of the apparatus. In this maintenance, it is possible to select a stream and perform the air purge on the corresponding stream. After the air purge maintenance, the bubble detection maintenance is performed again to check the presence or absence of a bubble. The work up to here can be performed by the operator and the service person. When a bubble remains even after the air purge, the service person performs the following work.

·Check whether connection of a pipe between the injection valve 207 and the auto purge valve 205 is loosened.
·Release the connection of the corresponding pipe, and connect the pipe again.
·Perform bubble detection maintenance again to check the presence or absence of a bubble.
·Replace the corresponding pipe.
·Replace the injection valve 207.
·Replace the auto purge valve 205.
·Perform bubble detection maintenance again to check the presence or absence of a bubble.

When a bubble remains between the auto purge valve 205 and the liquid delivery pump, a result and a remedy are displayed on the maintenance screen. On the maintenance screen, a result "bubble remains between auto purge valve and liquid delivery pump of stream ***", and remedies "please perform air purge maintenance and perform bubble detection maintenance again" and "please contact service person when bubble remains" are displayed. The air purge maintenance is selected from the maintenance screen of the GUI of the apparatus. In this maintenance, it is possible to select a stream and perform the air purge on the corresponding stream. After the air purge maintenance, the bubble detection maintenance is performed again to check the presence or absence of a bubble. The work up to here can be performed by the operator and the service person. When a bubble remains even after the air purge, the service person performs the following work.

·Check whether connection of a pipe between the auto purge valve 205 and the liquid delivery pump is loosened.
·Release the connection of the corresponding pipe, and connect the pipe again.
·Perform bubble detection maintenance again to check the presence or absence of a bubble.
·Replace the corresponding pipe.
·Replace the auto purge valve 205.
·Perform replacement of a replacement component (pump head) of the liquid delivery pump.
·Perform bubble detection maintenance again to check the presence or absence of a bubble.

A result of the bubble detection maintenance, that is, information ($\Delta P_1$, $\Delta P_2$, $\Delta T$) when it is determined whether a bubble remains in a flow path is stored in a database of a computer unit (CU) 307. FIGS. 5 to 7 respectively show graphs 501 (601, 701) of temporal changes of the maintenance results stored in the database. As shown in FIGS. 5 to 7, the graphs 501 (601, 701) are obtained by plotting temporal change times (day) 502 (602, 702) and deviations 503 (603, 703) of the information ($\Delta P_1$, $\Delta P_2$, $\Delta T$) of the maintenance result. 0% of the deviation is an average value of predetermined values. Here, for example, a range within ± 7% of the deviation is set as thresholds (dotted line in FIGS. 5 to 7) in which there is no possibility of bubble generation. From transition of the temporal change information of the deviation, when the deviation approaches the threshold even within the threshold, it can be diagnosed that there is a possibility of the bubble generation. Therefore, according to the present embodiment, it is possible to diagnose the presence or absence of the possibility of the bubble generation at an early stage using the above-described information, or to perform prediction of the presence or absence of the possibility of the bubble generation at an early stage, and to perform maintenance work such as adjustment or replacement of the liquid chromatograph 300 or components.

The above-described various types of control are performed by the CU 307 (FIG. 1). The CU 307 may be implemented by a single device or a plurality of devices. The CU 307 may be incorporated in the liquid chromatograph 300 or may be provided outside the liquid chromatograph 300.

Hereinafter, differences between the technique in the related art and the technique according to the disclosure will be reorganized.

In the technique in PTL 1, switching between guiding a mobile phase from a liquid delivery system to a separation column and discharging the mobile phase to a drain can be made by switching a switching valve. Further, it is disclosed that the switching valve is not necessarily provided in order to detect a liquid delivery failure. On the other hand, in the technique according to the disclosure, it is not necessary to discharge the mobile phase to the drain by switching the flow path switching valve, and the pressure fluctuation when the pressure lowered by rotating the flow path switching valve increases is used as an index. That is, the technique according to the disclosure is different from device components in PTL 1.

In addition, in the technique according to the disclosure, since it is possible to detect the bubble remaining by using, as the index, the pressure fluctuation when the pressure lowered by rotating the flow path switching valve increases, it is possible to detect the remaining bubble not only inside the liquid delivery pump but also in the flow path from the liquid delivery pump between the flow path switching valves. In addition, in the apparatus having the configuration in which the plurality of flow path switching valves are provided, the remaining bubble can be detected in the flow path from the liquid delivery pump to the downstream flow path switching valve and the flow path between the plurality of flow path switching valves by using, as the index, the pressure fluctuation when the pressure lowered by rotating each flow path switching valve increases. In this way, in the technique according to the disclosure, it is possible to determine the bubble remaining location in the flow path.

In addition, in the technique according to the disclosure, it is possible to easily determine a flow path in which a bubble remains even in a complicated apparatus configuration. The series of steps for determining a flow path in which a bubble remains is automated, and the operator or the service person selects and executes the maintenance item from the GUI screen of the apparatus. Pressure data obtained by executing this maintenance item is accumulated in the database, and by analyzing the temporal change, it is possible to diagnose an operation abnormality and a failure state at an early stage, and to perform prediction at an early stage. Therefore, in the technique according to the disclosure, maintenance work such as adjustment or replacement of the liquid chromatograph 300 or components can be performed at an early stage.

The technique according to the disclosure is not limited to the above-described embodiment, and includes various modifications. For example, the embodiment has been described in detail for easy understanding of the technique according to the disclosure, and is not necessarily limited to those having all the configurations described above. Further, a part of a configuration according to a certain embodiment can be replaced with a configuration according to another embodiment, and a configuration according to another embodiment can be added to a configuration according to a certain embodiment. In addition, it is possible to add, delete, or replace a part of configurations of each embodiment with another configuration.

Reference Signs List

201 first liquid delivery pump
202 second liquid delivery pump
203 first pressure sensor
204 second pressure sensor
205 auto purge valve (flow path switching valve, first switching valve)
206 three-way joint
207 injection valve (flow path switching valve, first switching valve, second switching valve)
208 sipper
209 sample holder
210 syringe
211 waste liquid flow path
212 column
213 first flow path
214 second flow path
215 third flow path
216 sample loop
300 liquid chromatograph
301 first stream
302 second stream
303 third stream
304 stream select valve (flow path switching valve, second switching valve)
305 detector
501, 601, 701 graph
502, 602, 702 temporal change time (day)
503, 603, 703 deviation

## Claims

1. A method for controlling a liquid chromatograph including

   a liquid delivery pump,
   a flow path connected to the liquid delivery pump,
   a flow path switching valve provided in the flow path, the flow path switching valve being configured to switch a plurality of connection destinations for the flow path, and
   a pressure sensor configured to detect at least one of a liquid delivery pressure of the liquid delivery pump, a flow path pressure in the flow path, and a pressure applied to the flow path switching valve,

   the method comprising:
   rotating the flow path switching valve during liquid delivery from the liquid delivery pump, and determining whether a bubble remains in the flow path based on a pressure fluctuation when the pressure lowered by rotating the flow path switching valve increases.

2. The method for controlling a liquid chromatograph according to claim 1, wherein

   the flow path switching valve includes a first switching valve positioned on an upstream side with respect to a flow of a fluid, and a second switching valve connected to a downstream of the first switching valve via the flow path, and based on the pressure fluctuation when the first switching valve is rotated and the pressure fluctuation when the second switching valve is rotated, it is determined whether a bubble remains in a flow path from the liquid delivery pump to the first switching valve and whether a bubble remains in a flow path from the first switching valve to the second switching valve.

3. The method for controlling a liquid chromatograph according to claim 2, wherein

a time fluctuation for returning to a specified pressure is used as a determination criterion.

4. The method for controlling a liquid chromatograph according to claim 2, wherein
the determination is executable during both an operation and maintenance.

5. The method for controlling a liquid chromatograph according to claim 2, further comprising:
storing, in a database, information when it is determined whether a bubble remains in the flow path, and diagnosing whether there is a possibility of bubble generation based on the corresponding information.

6. The method for controlling a liquid chromatograph according to claim 2, wherein

the first switching valve is an auto purge valve, and the second switching valve is an injection valve, or
the first switching valve is an injection valve, and the second switching valve is a stream select valve.

**Amended claims under Art. 19.1 PCT**

1. (Amended) A method for controlling a liquid chromatograph including

a liquid delivery pump,
a flow path connected to the liquid delivery pump,
a plurality of streams provided in the flow path and including a pressure sensor configured to detect at least a flow path pressure in the flow path and a separation column configured to separate a component of a fluid flowing in the flow path, and
a flow path switching valve configured to select one stream to be used for analysis from the plurality of streams,

the method comprising:
rotating the flow path switching valve during liquid delivery from the liquid delivery pump, and determining a stream in which a bubble remains in the flow path based on a pressure fluctuation when the pressure lowered by rotating the flow path switching valve increases.

2. (Amended) The method for controlling a liquid chromatograph according to claim 1, wherein

each of the plurality of streams includes a first switching valve positioned upstream of a flow of a fluid, and a second switching valve connected to a downstream of the first switching valve via the flow path, and
based on the pressure fluctuation when the first switching valve is rotated and the pressure fluctuation when the second switching valve is rotated, it is determined whether a bubble remains in a flow path from the liquid delivery pump to the first switching valve and whether a bubble remains in a flow path from the first switching valve to the second switching valve.

3. The method for controlling a liquid chromatograph according to claim 2, wherein
a time fluctuation for returning to a specified pressure is used as a determination criterion.

4. The method for controlling a liquid chromatograph according to claim 2, wherein
the determination is executable during both an operation and maintenance.

5. The method for controlling a liquid chromatograph according to claim 2, further comprising:
storing, in a database, information when it is determined whether a bubble remains in the flow path, and diagnosing whether there is a possibility of bubble generation based on the corresponding information.

6. (Amended) The method for controlling a liquid chromatograph according to claim 2, wherein
the first switching valve is an auto purge valve, and the second switching valve is an injection valve.

**Statement under Art. 19.1 PCT**

Contents of Amendments

(i) The description of "a pressure sensor configured to detect at least a flow path pressure in the flow path" in Claim 1 after the amendment is based on the description in Claim 1 before the amendment.
(ii) The description of "a separation column configured to separate a component of a fluid flowing in the flow path" in Claim 1 after the amendment is based on paragraphs 0015 and 0002 of the specification at the time of the application.
(iii) The description of "a plurality of streams, and" in Claim 1 after the amendment is based on paragraphs 0013 and 0014 of the specification, FIG. 1, and the like at the time of the application.
(iv) The description of "a flow path switching valve configured to select one stream to be used for analysis from the plurality of streams" in Claim 1 after the amendment is based on paragraph 0020 of the specification, FIG. 1, and the like at the time of the application.

(v) The description of "rotating the flow path switching valve during liquid delivery from the liquid delivery pump, and determining a stream in which a bubble remains in the flow path based on a pressure fluctuation when the pressure lowered by rotating the flow path switching valve increases" in Claim 1 after the amendment is based on paragraphs 0028 and 0029 of the specification at the time of the application.

(vi) The description of "each of the plurality of streams includes a first switching valve positioned upstream of a flow of a fluid, and a second switching valve connected to a downstream of the first switching valve via the flow path, and" in Claim 2 after the amendment is based on paragraph 0026 of the specification at the time of the application.

(vii) In Claim 6 after the amendment, the description of "the first switching valve is an injection valve, and the second switching valve is a stream select valve" is deleted.

Description

The method for controlling a liquid chromatograph according to Claim 1 to Claim 6 after the amendment is not described in any of the documents cited in the international research reports, and is not obvious to those skilled in the art.

[FIG. 1]

EP 4 446 732 A1

[FIG. 2]

EP 4 446 732 A1

[FIG. 3A]

[FIG. 3B]

[FIG. 4]

START BUBBLE DETECTION

S1 — RESET VALVE TO HOME POSITION

S2 — START LIQUID DELIVERY OF FIRST LIQUID DELIVERY PUMP AND SECOND LIQUID DELIVERY PUMP OF EACH STREAM, AND PRESSURE LOG ACQUISITION

S3 — STABILIZE PRESSURE (ABOUT 50 MPa)

S4 — ROTATE STREAM SELECT VALVE

S5 — ACQUIRE PRESSURE VALUE OF EACH LIQUID DELIVERY PUMP

S6 — DETERMINE PRESENCE OR ABSENCE OF BUBBLE BASED ON PRESSURE FLUCTUATION VALUE (DECREASE AMOUNT AND INCREASE AMOUNT)

S7 — BUBBLE REMAINS? — Yes

No

S8 — STOP LIQUID DELIVERY OF FIRST LIQUID DELIVERY PUMP AND SECOND LIQUID DELIVERY PUMP OF EACH STREAM

END

S9 — ROTATE INJECTION VALVE OF STREAM WITH REMAINING BUBBLE

S10 — ACQUIRE PRESSURE VALUE OF EACH LIQUID DELIVERY PUMP

S11 — DETERMINE PRESENCE OR ABSENCE OF BUBBLE BASED ON PRESSURE FLUCTUATION VALUE (DECREASE AMOUNT AND INCREASE AMOUNT)

S12 — BUBBLE REMAINS? — Yes

No

S13 — FIND THAT BUBBLE REMAINS BETWEEN STREAM SELECT VALVE AND INJECTION VALVE

S20 — STOP LIQUID DELIVERY OF FIRST LIQUID DELIVERY PUMP AND SECOND LIQUID DELIVERY PUMP OF CORRESPONDING STREAM

END

S14 — ROTATE AUTO PURGE VALVE OF STREAM WITH REMAINING BUBBLE

S15 — ACQUIRE PRESSURE VALUE OF EACH LIQUID DELIVERY PUMP

S16 — DETERMINE PRESENCE OR ABSENCE OF BUBBLE BASED ON PRESSURE FLUCTUATION VALUE (DECREASE AMOUNT AND INCREASE AMOUNT)

S17 — BUBBLE REMAINS? — Yes

No — S18 — FIND THAT BUBBLE REMAINS BETWEEN INJECTION VALVE AND AUTO PURGE VALVE

FIND THAT BUBBLE REMAINS BETWEEN AUTO PURGE VALVE AND PUMP

S19

EP 4 446 732 A1

14

[FIG. 5]

[FIG. 6]

[FIG. 7]

# INTERNATIONAL SEARCH REPORT

International application No.

**PCT/JP2022/041993**

## A. CLASSIFICATION OF SUBJECT MATTER

*G01N 30/02*(2006.01)i; *G01N 30/26*(2006.01)i; *G01N 30/32*(2006.01)i; *G01N 30/86*(2006.01)i
FI:    G01N30/86 T; G01N30/26 M; G01N30/02 Z; G01N30/32 Z; G01N30/86 P; G01N30/86 V

According to International Patent Classification (IPC) or to both national classification and IPC

## B. FIELDS SEARCHED

Minimum documentation searched (classification system followed by classification symbols)

G01N30/02; G01N30/26; G01N30/32; G01N30/86

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

## C. DOCUMENTS CONSIDERED TO BE RELEVANT

| Category* | Citation of document, with indication, where appropriate, of the relevant passages | Relevant to claim No. |
|---|---|---|
| X | JP 2015-21931 A (TOSOH CORP.) 02 February 2015 (2015-02-02) paragraphs [0023]-[0036], [0048], fig. 5-8 | 1-6 |
| A | WO 2020/183684 A1 (SHIMADZU CORP.) 17 September 2020 (2020-09-17) entire text, all drawings | 1-6 |
| A | JP 2004-507639 A (WATERS INVESTMENTS LTD.) 11 March 2004 (2004-03-11) entire text, all drawings | 1-6 |
| A | US 2016/0327514 A1 (AGILENT TECHNOLOGIES, INC.) 10 November 2016 (2016-11-10) entire text, all drawings | 1-6 |
| A | JP 2000-130353 A (SHIMADZU CORP.) 12 May 2000 (2000-05-12) entire text, all drawings | 1-6 |
| A | JP 01-182579 A (HITACHI, LTD.) 20 July 1989 (1989-07-20) entire text, all drawings | 1-6 |
| A | JP 63-106382 A (SHIMADZU CORP.) 11 May 1988 (1988-05-11) entire text, all drawings | 1-6 |

☐ Further documents are listed in the continuation of Box C.    ☑ See patent family annex.

|  |  |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **30 November 2022** | **24 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/041993**

| Patent document cited in search report | | | Publication date (day/month/year) | Patent family member(s) | | | Publication date (day/month/year) |
|---|---|---|---|---|---|---|---|
| JP | 2015-21931 | A | 02 February 2015 | (Family: none) | | | |
| WO | 2020/183684 | A1 | 17 September 2020 | US entire text, all drawings CN | 2022/0146474 113544503 | A1 A | |
| JP | 2004-507639 | A | 11 March 2004 | US entire text, all drawings | 5823747 | A | |
| US | 2016/0327514 | A1 | 10 November 2016 | GB entire text, all drawings | 2538103 | A | |
| JP | 2000-130353 | A | 12 May 2000 | (Family: none) | | | |
| JP | 01-182579 | A | 20 July 1989 | (Family: none) | | | |
| JP | 63-106382 | A | 11 May 1988 | (Family: none) | | | |

Form PCT/ISA/210 (patent family annex) (January 2015)

**EP 4 446 732 A1**

**Patent documents cited in the description**

- WO 2020183774 A